# EUROPEAN PATENT APPLICATION

(11) **EP 3 719 664 A1**
(43) Date of publication of application: **07.10.2020**
(21) Application number: 19166935.7
(22) Date of filing: 03.04.2019
(51) Int. Cl.: G06F 16/2455, G06F 16/23, G06F 16/176

(54) **SYSTEM AND METHOD FOR OR SHARING OBJECTS BASED ON THE UNIVERSAL PLUG AND PLAY (UPNP) CONTENT DIRECTORY SERVICE (CDS) PROTOCOL**

(71) Applicant: Advanced Digital Broadcast S.A., 1293 Bellevue (CH)
(72) Inventor: Stolcenburg, Adam, 65-119 Zielona Gora (PL)
(74) Representative: Blonski, Pawel

(57) **Abstract**

A method for sharing objects based on the Universal Plug and Play (UPnP) content directory service (CDS) protocol, the method being characterized in that it comprises the steps of: creating a database defining relations between content objects wherein said database comprises: an objects table (110) storing for each object a unique identifier, its parent object's unique identifier, its name and its type; and an UPnP data table (120) storing a unique identifier of a container defined in the objects table (110), its current version as well as a count of its children objects; upon each modification of the objects table (110) updating its corresponding current version value in the UPnP data table (120).

## Description

### TECHNICAL FIELD

The present invention relates to a system and method for or sharing objects based on the Universal Plug and Play (UPnP) content directory service (CDS) protocol. In particular, the present invention relates to tracking versions and changes of objects present in the CDS.

### BACKGROUND OF THE INVENTION

The UPnP CDS is used to share objects in a tree structure wherein an object may represent a container or an item. Containers may group other containers and items. An item usually represents, but is not limited to, media files like photos, music files and video files.

A function of sharing objects using the UPnP CDS sets requirements related to a structure used to share different types of objects as well as keep track of modifications made to this structure, which are usually different then requirements of applications, which present data of the same objects to a user.

Direct implementation of the UPnP requirements may lead to maintaining two different structures keeping the same objects - one used for local presentation, and the other used for implementation of the UPnP CDS requirements. Another possibility is to add features related to the UPnP CDS to the existing structure, which leads to a complicated implementation as well as pollution of the original structure thus making the solution difficult to maintain.

It would be advantageous to enrich the structure used for local presentation with a self maintaining external structure containing UPnP CDS specific data.

The aim of the development of the present invention is an improved and resources-effective system and method for or sharing objects based on the Universal Plug and Play (UPnP) content directory service (CDS) protocol.

### SUMMARY AND OBJECTS OF THE PRESENT INVENTION

An object of the present invention is a method for sharing objects based on the Universal Plug and Play (UPnP) content directory service (CDS) protocol, the method being characterized in that it comprises the steps of: creating a database defining relations between content objects wherein said database comprises: an objects table storing, for each object, a unique identifier, its parent object's unique identifier, its name and its type; and an UPnP data table storing a unique identifier of a container stored in the objects table, its current version as well as a count of its children objects; upon each modification of object's data of the objects table updating its corresponding current version value and the count of its children objects in the UPnP data table.

Preferably, said modification step is executed as a series of steps comprising: receiving and executing a modification of the objects table; updating the respective current version value and the children objects count value, of the UPnP data table, by means of database triggers; notifying a module responsible for building and sending the ContainerUpdatelD state variable of the UPnP CDS.

Preferably, said modification is selected from a group comprising actions of: inserting, updating, deleting of a row describing an object.

Preferably, said database is an SQL-type database.

Preferably, a process of handling of the UPnP CDS Browse() action comprises the following steps: executing, by an UPnP Control Point, said Browse() action on the UPnP CDS wherein the process comprises analysing input arguments and transforming them into a first SQL query matching the requested objects of the objects table; executing said first SQL query and transforming all matching rows into a Result and NumberReturned output arguments of the UpnP CDS; applying one or more values, received as the ObjectID input argument, and preparing a second SQL query which is configured to match row(s) from the UPnP data table whose unique identifier of a container has the same value; after execution of the second SQL query, using a value of the count of its children objects as the value returned via the TotalMatches UPnP output argument, and using a value of the current version as the value of the UpdatelD UPnP output argument.

Preferably, the objects table and the UPnP data table are defined using the following SQL statements:
CREATE TABLE objects(id INTEGER PRIMARY KEY AUTOINCREMENT, parent_id INTEGER NOT NULL, name TEXT NOT NULL, type TEXT NOT NULL);
CREATE TABLE upnp_data(upnp_data_container_id TEXT PRIMARY KEY, upnp_data_update_id INTEGER NOT NULL DEFAULT 0, upnp_data_child_count INTEGER NOT NULL DEFAULT 0);

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for sharing objects based on the Universal Plug and Play (UPnP) content directory service (CDS) protocol. Further details and features of the present invention, its nature and various advantages will become more apparent from the following detailed description of the preferred embodiments shown in a drawing, in which:
Fig. 1. presents an exemplary objects table and the upnp_data table together with exemplary data;
Fig. 2. presents part of the CDS tree structure which can be created from the exemplary contents of the objects table from Fig. 1;
Fig. 3 presents a process of synchronization of UPnP content; and
Fig. 4 shows a process of handling of the UPnP CDS Browse() action.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

The present invention presents a method of representation of a tree structure of objects defined by the UPnP CDS in relational databases managed by the Structured Query Language (SQL), which keeps track of container updates according the UPnP CDS specifications in version v1 and v2, as well as specifications in version v3 and v4, without the "Tracking Changes" feature.

Each object, shared using the CDS, is represented by data held in one row of a table kept in the relational database. The CDS tree structure is described by SQL queries, which match objects from the table so that a CDS tree structure is created. The data related to tracking of updates of a specific container as well as the number of its direct children in the CDS tree structure are held in one row of an auxiliary table, the content of which is synchronized preferably by SQL triggers monitoring modifications of rows of the table holding data representing said CDS objects.

Additional data fields are required to maintain an integer value, associated with each container, which is incremented:
- each time properties of that container have changed; or
- a child object has been added or removed from the container; or
- properties of any direct child object, which is not a container have been modified.

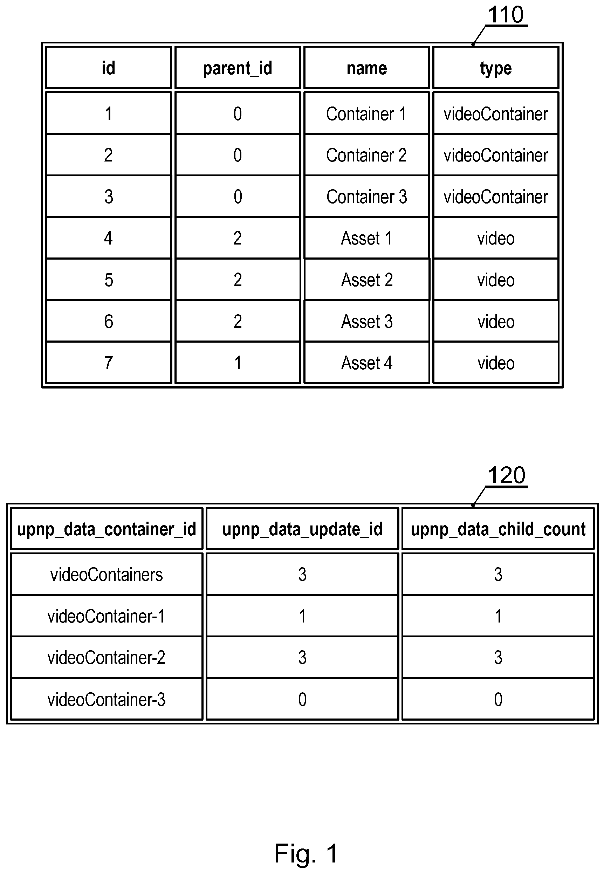

Fig. 1. presents an exemplary objects table (110) and the upnp_data table (120) together with exemplary content data.

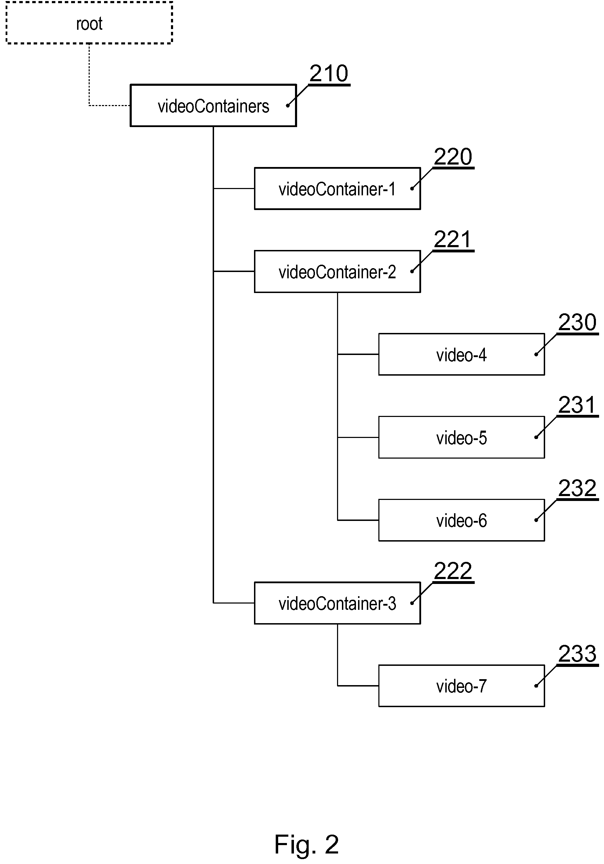

Fig 2. presents a part of the CDS tree structure, which can be created from the exemplary content of the objects table (110) from Fig. 1.

Media objects are kept in a data table further referred to as the objects table (110). The objects table (110) is stored in a relational database, preferably managed by the Structured Query Language (SQL). Each row of the objects table (110) may be used as a source of one or more objects shared via the UPnP CDS and comprises, for each object, a unique identifier, its parent object's unique identifier, its name and its type.

There is also an additional table, further referred to as the upnp_data table (120), which keeps auxiliary information of objects representing UPnP containers, needed to comply with the UPnP specification. This upnp_data table (120) keeps the following information:
- a value of the @id property of the container, which is described by a given row, which delivers unique value representing a given container in the UPnP CDS tree (110), this value is further referred to as upnp_data_container_id. Each object from the objects table (110) may be shared more than once in a CDS tree and the @id value must be unique, therefore the @id is not the id from the objects table (110);
- a value of update id associated with the given container as specified by the UPnP CDS specification, further referred to as upnp_data_update_id. This value denotes a current version of the respective container and is incremented with each change of the object;
- a value of the @childCount property of the container, which keeps the number of direct children of the given container, this value is further referred to as the upnp_data_child_count.

A tree structure (Fig. 2), shared via the UPnP CDS, is described as a set of conditions and procedures. For each container, or a group of containers, the following conditions and procedures are defined:
1. A condition matching zero or more rows from the objects table, denoting, which objects belong to the container. This condition is further referred to as the objects' matching condition;
2. A condition, which for each row matched by the objects' matching condition, defines whether a given row represents an item or a container;
3. A set of procedures, which for each row matched by the objects' matching condition, generate values of properties defined by the UPnP CDS specification, where values of the following properties are particularly important:
   a) @id - a value uniquely identifying a given object within the CDS tree (Fig. 2);
   b) @parentID - a value providing @id value of a container, which holds given object in the CDS tree.

Procedures for generating values of the @id and @parentID properties are reversible such that for each generated value there is a possibility to determine whether this value identifies an item or a container and define a condition, which allows to match a row (if such a row exists) of the objects table (110) used to generate the value. For values representing containers there is also a possibility to find their objects' matching condition, which matches objects belonging to these containers.

The content of the upnp_data table (120) may initially be filled with initial data, but it is later synchronized automatically by a number of SQL triggers monitoring the objects table (120) upon each modification of rows of the objects table.

Triggers are created for each container, or a group of containers, and are built using a corresponding set of conditions and procedures. The number of triggers may vary, but they handle situations in which:
1. The objects' matching condition is true for a newly inserted row of data;
2. The objects' matching condition is or was true respectively for a row of data after and before its update; This trigger monitors the following cases: (A) an object belonging to a given container has been modified; (B) an object belonging to a given container has been modified such that it does not belong to said container; (C) an object belonging to a given container has been modified such that it belongs to said container;
3. The objects' matching condition is true for a row of data, which is being deleted.

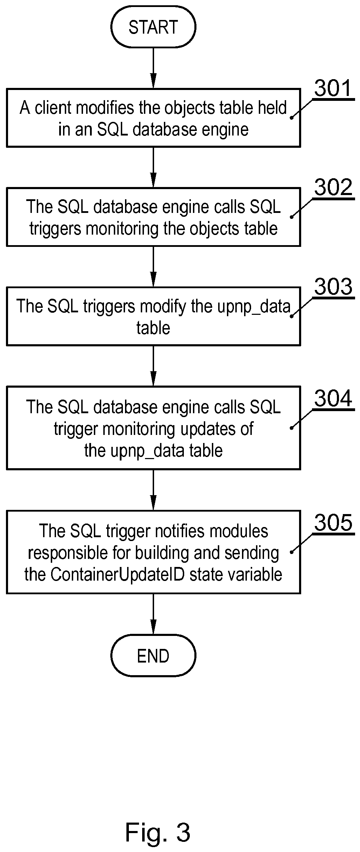

The three triggers above may be activated in step 302 described with reference to Fig. 3.

Each of the above triggers behaves differently in case when a given row, which triggered a change, represents an item or a container, also different handling is needed in cases when the objects' matching condition is true for a new data of an updated row and was not true before, was true and is no longer true, as well as was and is true.

To simplify further considerations, each of the cases, which require different handling, is considered to be implemented by a dedicated trigger. An activation condition and behavior of those triggers may be the following:
1. A trigger executed when the objects' matching condition is true for a newly inserted row of data and these data represent a container. It performs the following actions:
   - adds a new entry to the upnp_data table (120) where the upnp_data_container_id is set to the @id value, which is used to uniquely identify the newly inserted container in the CDS tree;
   - modifies row of the upnp_data table (120) where the upnp_data_container_id is equal to value of the @id property of a container, which is a parent of the newly inserted container in such a way that the upnp_data_update_id is incremented and the upnp_data_child_count is incremented.
2. A trigger executed when the matching condition has been met for data after an update and has not been met for data before the update and these data represent a container. It performs the same actions as the trigger 1.
3. A trigger executed when the matching condition has been met for both the data after and before an update and these data represent a container. It performs the following actions:
   - modifies a row of the upnp_data table (120) where the upnp_data_container_id is equal to a value of the @id property of the modified container in such a way that the upnp_data_update_id is incremented.
4. A trigger executed when the matching condition was, but is no longer met respectively for the data before and after an update and these data represent a container. It performs the following actions:
   - modifies a row of the upnp_data table (120) where the upnp_data_container_id is equal to value of the @id property of a container, which was a parent of the updated container in such a way that the upnp_data_update_id is incremented and the upnp_data_child_count is decremented;
   - removes an entry from the upnp_data table (120) where upnp_data_container_id is set to the @id value which is used to uniquely identify the updated container in the CDS tree.
5. A trigger executed when the matching condition is true for a row, which is being deleted and these data represent a container. It performs the same actions as the trigger 4.
6. A trigger executed when the matching condition is true for a newly inserted row of data and these data represent an item. It modifies a row of the upnp_data table (120) where the upnp_data_container_id is equal to value of the @id property of a container, which is a parent of the newly inserted item in such a way that the upnp_data_update_id is incremented and the upnp_data_child_count is incremented.
7. A trigger executed when the matching condition is, but was not true respectively for the data after and before an update and these data represent an item. It makes same modifications as the trigger 6.
8. A trigger executed when the matching condition is and was true respectively for the data after and before an update and these data represent an item. It modifies a row of the upnp_data table (120) where the upnp_data_container_id is equal to value of the @id property of a container which is a parent of the newly inserted item in such a way that the upnp_data_update_id is incremented.
9. A trigger executed when the matching condition was, but is no longer true for the data before and after an update respectively and these data represent an item. It modifies a row of the upnp_data table where the upnp_data_container_id is equal to value of the @id property of a container which was a parent of the newly updated item in such a way that the upnp_data_update_id is incremented and the upnp_data_child_count is decremented.
10. A trigger executed when the matching condition is true for a row of data, which is being deleted and these data represent an item. It makes same modifications as the trigger 9.

When a given container may hold only containers, then only triggers 1 to 5 are needed, and when it may hold only items, then only triggers 6 to 10 are needed. In these cases the condition, which determines whether a given row represents a container may be omitted, as the result of such condition is constant.

The ContainerUpdatelDs state variable, as defined by the UPnP CDS specification, is implemented by monitoring of updates of the upnp_data table (120). This may be accomplished by using a trigger called on every update of the upnp_data table (102). The trigger takes the upnp_data_container_id value together with the new value of the upnp_data_update_id and notifies modules responsible for building and sending of the ContainerUpdatelDs state variable.

The process of synchronization of contents of the upnp_data table (120) is shown in Fig. 3. The process finishes by a notification of modules responsible for building and sending of the ContainerUpdatelD state variable (defined by the UPnP CDS). The method starts at step (301) when a database client makes a modification of the objects table (110) (e.g. inserting, updating or deleting of a rows describing an object).

During such modification the SQL database engine matches the modification with appropriate SQL triggers and calls them (302). The triggers make predefined modifications of the upnp_data table (120) according to their implementation (303).

The update of the upnp_data table (120) causes the SQL database engine to call an SQL trigger registered on updates of the upnp_data table (304), and the trigger notifies modules responsible for building and sending the ContainerUpdatelD state variable (305).

The Browse() action, defined by the UPnP CDS specification, is implemented by combining information from the objects and the upnp_data tables (120) as well as conditions and procedures used to describe UPnP CDS tree structure.

To implement said Browse() action, when the BrowseFlag argument is set to the BrowseDirectChildren value, the value provided as the ObjectID argument is analysed. As this value should be equal to a value of the @id property of an object shared though the CDS tree, there is a possibility to verify that it points to a container, find its corresponding row in the objects table (110) and its objects' matching condition as well as procedures used to generate properties defined by the UPnP CDS specification.

All those information can be used to prepare a database query (preferably an SQL query) operating on a set of elements composed of rows from the objects table (110) joined by the value of the @id property generated for each row with the value of the upnp_data_container_id from the upnp_data table (120).

The received Filter argument is used to select generators for listed properties. An expression placed after the WHERE clause of the query is built from the objects' matching condition and a condition matching value of the @parentID property generated for each row with value of the container's @id property provided as the ObjectID argument. The SQL query is further completed by adding parts responsible for handling of the SortCriteria, RequestedCount and StartingIndex arguments, which according to the SQL syntax are implemented by the ORDER, LIMIT and OFFSET keywords. All objects matched by the prepared SQL query are returned inside the Result output argument and their number is returned inside the NumberReturned output argument.

The TotalMatches output argument is set to the value of the upnp_data_child_count column, and the UpdatelD argument is set to the value of the upnp_data_update_id column of a upnp_data table's row whose upnp_data_container_id column has value equal to the received ObjectID argument.

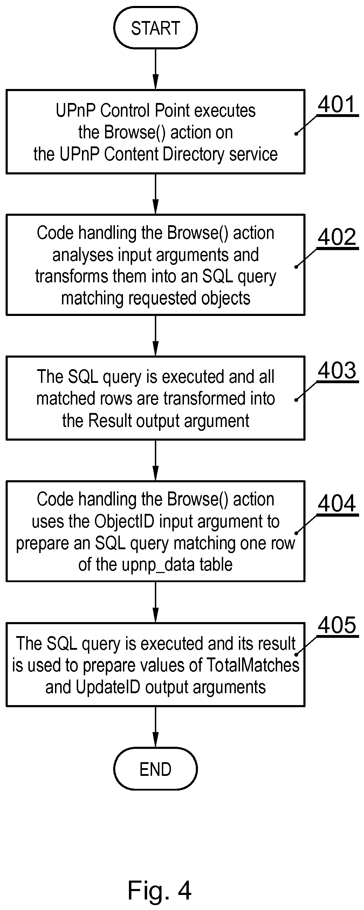

Fig. 4. Presents the process of handling of the UPnP CDS Browse() action. The process of handling the Browse() action starts when an UPnP Control Point executes the Browse() action on the UPnP Content Directory Service (401), the process handling this action analyses input arguments and transforms them into a first SQL query matching requested objects (402) of the objects table (110).

The first SQL query is then executed and all matching rows are transformed into Result and NumberReturned output arguments (403).

Additionally, the process responsible for handling of the Browse() action uses one or more values received as the ObjectID input argument and prepares a second SQL which matches row(s) from the upnp_data table (120) whose upnp_data_container_id has the same value (404), after execution of the second SQL query, a value of the upnp_data_child_count column is used as the value returned via the TotalMatches output argument, and a value of the upnp_data_update_id column is used as the value of the UpdatelD output argument (405).

The exemplary objects table (110) can be used as a source to create the CDS tree structure depicted on Fig. 2. In order to accomplish this, according to this embodiment, it is required to define a set of conditions and procedures for containers (220, 221, 222), which are direct children of the videoContainers container (210), and items (230, 231, 232, 233) which are direct children of those containers.

For the video containers (220, 221, 222) the following conditions and procedures are defined:
1. The object's matching condition is defined as type = 'videoContainer';
2. The condition 1 is sufficient to determine that the object is a container, therefore there is no need for any additional condition in order to distinguish items from containers;
3. UPnP CDS properties and procedures used to generate them are defined as:
   - @id - 'videoContainer-' ∥ objects.id
   - @parentID - 'videoContainers'
   - @restricted - '1'
   - @childCount - upnp_data.upnp_data_child_count
   - dc:title - objects.name
   - upnp:class - 'object.container'

For the video items (230, 231, 232, 233) the following conditions and procedures are defined:
1. The object's matching condition is defined as type='video';
2. The condition 1 is sufficient to tell that the object is a container, so no additional condition is needed to distinguish items from containers;
3. UPnP CDS properties and procedures used to generate them are defined as:
   - @id - 'video-' ∥ objects.id
   - @parentID - 'videoContainer-' ∥ objects.parent_id
   - @restricted - '1'
   - dc:title - objects.name
   - upnp:class - 'object.item.videoltem'

Based on the exemplary database structure and the above information a number of SQL statements may be prepared.
1. Create the exemplary objects table.

   ```
 CREATE TABLE objects(id INTEGER PRIMARY KEY AUTOINCREMENT,
 parent_id INTEGER NOT NULL, name TEXT NOT NULL, type TEXT NOT
 NULL);
```
2. Create the upnp_data table.

   ```
 CREATE TABLE upnp_data(upnp_data_container_id TEXT PRIMARY
 KEY, upnp_data_update_id INTEGER NOT NULL DEFAULT 0,
 upnp_data_child_count INTEGER NOT NULL DEFAULT 0);
```
3. Initialize the contents of the upnp_data table with the videoContainers (210) container used as the root for all videoContainers (220, 221, 222).

   ```
 INSERT INTO upnp_data(upnp_data_container_id)
 VALUES('videoContainers');
```
4. Create trigger monitoring updates of the upnp_data table.

   ```
 CREATE TRIGGER upnp_data_monitor AFTER UPDATE ON upnp_data
 FOR EACH ROW
          BEGIN
          SELECT
          notifyContainerUpdateID(NEW.upnp_data_container_id,
          NEW.upnp_data_update_id);
          END;
```

   Where the notifyContainerUpdatelD() is a custom function registered in the database engine. The implementation of the above trigger may vary significantly between different SQL database engines.
5. Create triggers which synchronize the contents of the upnp_data table during modifications of the objects table concerning the video containers.

   ```
 CREATE TRIGGER video_container_insert_trigger AFTER INSERT ON
 objects FOR EACH ROW
          WHEN (NEW.type='videoContainer')
          BEGIN
          INSERT INTO upnp_data (upnp_data_container_id)
          VALUES('videoContainer-' ∥ NEW.id);
          UPDATE upnp_data SET
          upnp_data_update_id=upnp_data_update_id+1,upnp_data_c
          hild_count=upnp_data_child_count+1 WHERE
          upnp_data_container_id='videoContainers';
          END;
 CREATE TRIGGER video_container_update_trigger1 AFTER UPDATE
 ON objects FOR EACH ROW
          WHEN (NEW.type='videoContainer') AND
          NOT(OLD.type='videoContainer')
          BEGIN
          INSERT INTO upnp_data (upnp_data_container_id)
          VALUES('videoContainer-' ∥ NEW.id);
          UPDATE upnp_data SET
          upnp_data_update_id=upnp_data_update_id+1,upnp_data_c
          hild_count=upnp_data_child_count+1 WHERE
          upnp_data_container_id='videoContainers';
          END;
 CREATE TRIGGER video_container_update_trigger2 AFTER UPDATE
 ON objects FOR EACH ROW
          WHEN (NEW.type='videoContainer') AND
          (OLD.type='videoContainer')
          BEGIN
          UPDATE upnp_data SET
          upnp_data_update_id=upnp_data_update_id+1 WHERE
          upnp_data_container_id='videoContainer-'∥NEW.id
          ;
          END;
 CREATE TRIGGER video_container_update_trigger3 AFTER UPDATE
 ON objects FOR EACH ROW
          WHEN NOT(NEW.type='videoContainer') AND
          (OLD.type='videoContainer')
          BEGIN
          UPDATE upnp_data SET
          upnp_data_update_id=upnp_data_update_id+1,upnp_data_c
          hild_count=upnp_data_child_count-1 WHERE
          upnp_data_container_id='videoContainers';
          DELETE FROM upnp_data WHERE
          upnp_data_container_id='videoContainer-' ∥ OLD.id;
          END;
 CREATE TRIGGER video_container_delete_trigger BEFORE DELETE
 ON objects FOR EACH ROW
          WHEN (OLD.type='videoContainer')
          BEGIN
          UPDATE upnp_data SET
          upnp_data_update_id=upnp_data_update_id+1,upnp_data_c
          hild_count=upnp_data_child_count-1 WHERE
          upnp_data_container_id='videoContainers';
          DELETE FROM upnp_data WHERE
          upnp_data_container_id='videoContainer-' ∥ OLD.id;
          END;
```
6. Create triggers which synchronize the contents of the upnp_data table during modifications of the objects table concerning the video items.

   ```
 CREATE TRIGGER video_item_insert_trigger AFTER INSERT ON
 objects FOR EACH ROW
          WHEN (NEW.type='video')
          BEGIN
          UPDATE upnp_data SET
          upnp_data_update_id=upnp_data_update_id+1,upnp_data_c
          hild_count=upnp_data_child_count+1 WHERE
          upnp_data_container_id='videoContainer-' ∥
          NEW.parent_id;
          END;
 CREATE TRIGGER video_item_update_trigger1 AFTER UPDATE ON
 objects FOR EACH ROW
          WHEN (NEW.type='video') AND NOT(OLD.type='video')
          BEGIN
          UPDATE upnp_data SET
          upnp_data_update_id=upnp_data_update_id+1,upnp_data_c
          hild_count=upnp_data_child_count+1 WHERE
          upnp_data_container_id='videoContainer-' ∥
          NEW.parent_id;
          END;
 CREATE TRIGGER video_item_update_trigger2 AFTER UPDATE ON
 objects FOR EACH ROW
          WHEN (NEW.type='video') AND (OLD.type='video')
          BEGIN
          UPDATE upnp_data SET
          upnp_data_update_id=upnp_data_update_id+1 WHERE
          upnp_data_container_id='videoContainer-' ∥
          NEW.parent_id;
          END;
 CREATE TRIGGER video_item_update_trigger3 AFTER UPDATE ON
 objects FOR EACH ROW
          WHEN NOT(NEW.type='video') AND (OLD.type='video')
          BEGIN
          UPDATE upnp_data SET
          upnp_data_update_id=upnp_data_update_id+1,upnp_data_c
          hild_count=upnp_data_child_count-1 WHERE
          upnp_data_container_id='videoContainer-' ∥
          OLD.parent_id;
          END;
 CREATE TRIGGER video_item_delete_trigger BEFORE DELETE ON
 objects FOR EACH ROW
          WHEN (OLD.type='video')
          BEGIN
          UPDATE upnp_data SET
          upnp_data_update_id=upnp_data_update_id+1,upnp_data_c
          hild_count=upnp_data_child_count-1 WHERE
          upnp_data_container_id='videoContainer-' ∥
          OLD.parent_id;
          END;
```
7. Insert elements to the objects table to fill the table with the same contents as presented in the exemplary objects table (110).

   ```
 INSERT INTO objects VALUES(null, 0, 'Container 1',
 'videoContainer');
 INSERT INTO objects VALUES(null, 0, 'Container 2',
  'videoContainer');
 INSERT INTO objects VALUES(null, 0, 'Container 3',
 'videoContainer');
 INSERT INTO objects VALUES(null, 2, 'Asset 1', 'video');
 INSERT INTO objects VALUES(null, 2, 'Asset 2', 'video');
 INSERT INTO objects VALUES(null, 2, 'Asset 3', 'video');
 INSERT INTO objects VALUES(null, 1, 'Asset 4', 'video');
```

During execution of the above insert statements the contents of the upnp_data table is modified, and the table is filled with the same contents as presented in the exemplary upnp_data table (120).

Thanks to the above data it is now possible to handle the Browse() action.

Exemplary input arguments which may be provided to the Browse() action to request enumeration of video containers may be defined as follows:
- ObjectID - "videoContainers"
- BrowseFlag - "BrowseDirectChildren"
- Filter - "*"
- Starting Index - "0"
- RequestedCount - "10"
- SortCriteria - "-dc:title"

Can be transformed into the following SQL query used to generate values returned through Result and NumberReturned output arguments.

```
 SELECT
          'videoContainer-' ∥ objects.id AS '@id',
          'videoContainers' AS '@parentID', '1' AS
          '@restricted', upnp_data.upnp_data_child_count AS
          '@childCount', objects.name AS 'dc:title',
          'object.container' AS 'upnp:class'
 FROM objects LEFT OUTER JOIN upnp_data
          ON '@id' = upnp_data.upnp_data_container_id
          WHERE type='videoContainer' AND
          '@parentID'='videoContainers' ORDER BY 'dc:title'
          DESC LIMIT 10 OFFSET 0;
```

And the UpdatelD and TotalMatches update arguments are generated from the result of the following query:

```
 SELECT upnp_data_update_id AS UpdateID, upnp_data_child_count
 AS TotalMatches FROM upnp_data WHERE
 upnp_data_container_id='videoContainers';
```

Exemplary input arguments, which may be provided to the Browse() action to request enumeration of video items belonging to a container with @id equal to videoContainer-2, may be defined as follows:
- ObjectID - "videoContainer-2"
- BrowseFlag - "BrowseDirectChildren"
- Filter - "*"
- Starting Index - "0"
- RequestedCount - "5"
- SortCriteria - "+dc:title"

Can be transformed into the following SQL query:

```
 SELECT
          'video-' ∥ objects.id AS '@id', 'videoContainer-' ∥
          objects.parent_id AS '@parentID', '1' AS
          '@restricted', objects.name AS 'dc:title',
          'object.item.videoItem' AS 'upnp:class'
 FROM objects LEFT OUTER JOIN upnp_data
          ON '@id' = upnp_data.upnp_data_container_id
          WHERE type='video' AND
          '@parentID'='videoContainer-2' ORDER BY 'dc:title'
          LIMIT 5 OFFSET 0;
```

And the UpdatelD and TotalMatches update arguments are generated from the result of the following query:

```
 SELECT upnp_data_update_id AS UpdateID, upnp_data_child_count
 AS TotalMatches FROM upnp_data WHERE
 upnp_data_container_id='videoContainer-2';
```

If one considers the fact that the first of the two above queries operates only on the data of the objects table, because all objects requested by the Browse() action are items, then the LEFT OUTER JOIN part may be omitted it this query.

According to the present invention it is possible to keep the UPnP CDS specific data separate from the application data. Modules operating on the objects table, which holds data in an application specific format, do not need to be aware of the UPnP CDS layer as thanks to the embodiment all modification made on the objects table are automatically reflected in appropriate changes of the UPnP CDS structure. Another advantage of the embodiment is the performance, as one query is sufficient to return values of the @childCount property for a number of containers returned by the Browse() action without the need to execute a separate query for each of the containers. Therefore, the invention provides a useful, concrete and tangible result.

The present invention may also be seen as enriching a CDS structure used for local presentation with a self maintaining external structure comprising UPnP CDS specific data.

The present invention may take the form of a computer program product embodied in any tangible medium of expression having computer usable program code embodied in the medium.

It can be easily recognized, by one skilled in the art, that the aforementioned method for or sharing objects based on the Universal Plug and Play (UPnP) content directory service (CDS) protocol may be performed and/or controlled by one or more computer programs. Such computer programs are typically executed by utilizing the computing resources in a computing device. Applications are stored on a non-transitory medium. An example of a non-transitory medium is a nonvolatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for sharing objects based on the Universal Plug and Play (UPnP) content directory service (CDS) protocol, the method being **characterized in that** it comprises the steps of:
• creating a database defining relations between content objects wherein said database comprises:
∘ an objects table (110) storing, for each object, a unique identifier, its parent object's unique identifier, its name and its type; and
∘ an UPnP data table (120) storing a unique identifier of a container stored in the objects table (110), its current version as well as a count of its children objects;
• upon each modification of object's data of the objects table (110) updating its corresponding current version value and the count of its children objects in the UPnP data table (120).

2. The method according to claim 1 wherein said modification step is executed as a series of steps comprising:
• receiving and executing a modification (301) of the objects table (110);
• updating the respective current version value and the children objects count value, of the UPnP data table (120), by means of database triggers (302, 303);
• notifying (304, 305) a module responsible for building and sending the ContainerUpdatelD state variable of the UPnP CDS.

3. The method according to claim 1 wherein said modification is selected from a group comprising actions of: inserting, updating, deleting of a row describing an object.

4. The method according to claim 1 wherein said database is an SQL-type database.

5. The method according to claim 4 wherein a process of handling of the UPnP CDS Browse() action comprises the following steps:
• executing, by an UPnP Control Point, said Browse() action on the UPnP CDS (401) wherein the process comprises analysing input arguments and transforming them into a first SQL query matching the requested objects (402) of the objects table (110);
• executing said first SQL query and transforming all matching rows into a Result and NumberReturned output arguments (403) of the UpnP CDS;
• applying one or more values, received as the ObjectID input argument, and preparing a second SQL query which is configured to match row(s) from the UPnP data table (120) whose unique identifier of a container has the same value (404);
• after execution of the second SQL query, using a value of the count of its children objects as the value returned via the TotalMatches UPnP output argument, and using a value of the current version as the value of the UpdatelD UPnP output argument (405).

6. The method according to claim 5 wherein the objects table (110) and the UPnP data table (120) are defined using the following SQL statements:
```
 CREATE TABLE objects(id INTEGER PRIMARY KEY
 AUTOINCREMENT, parent_id INTEGER NOT NULL, name TEXT
 NOT NULL, type TEXT NOT NULL);
 CREATE TABLE upnp_data(upnp_data_container_id TEXT
 PRIMARY KEY, upnp_data_update_id INTEGER NOT NULL
 DEFAULT 0, upnp_data_child_count INTEGER NOT NULL
 DEFAULT 0);
```

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.
